Europäisches Patentamt

European Patent Office

Office européen des brevets

(19)

(11) Publication number: **0 427 039 A1**

# EUROPEAN PATENT APPLICATION

(21) Application number: **90120234.1**

(51) Int. Cl.5: **A01F 15/08**

(22) Date of filing: **22.10.90**

(30) Priority: **08.11.89 IT 522789**

(43) Date of publication of application:
**15.05.91 Bulletin 91/20**

(84) Designated Contracting States:
**AT BE CH DE DK ES FR GB IT LI LU NL SE**

(71) Applicant: **CARRARO F.LLI GIUSEPPE & LUCIO S.P.A.**
**Via Roma, 82**
**I-36040 Grumolo Delle Abbadesse**

**(Vicenza)(IT)**

(72) Inventor: **Carraro, Giuseppe**
**Via Roma 82**
**I-36040 Grumolo Delle Abbadesse**
**Vicenza(IT)**

(74) Representative: **Forattini, Amelia**
**c/o Internazionale Brevetti Ingg. ZINI,**
**MARANESI & C. S.r.l. Piazza Castello 1**
**I-20121 Milano(IT)**

(54) **A machine for enveloping fodder bales or the like.**

(57) A machine for enveloping fodder bales, or the like, in a protective web or film, includes a rocker arm (19) controlled to stay off a bale (13) on the cradle (12) during application of the protective web or film (15), and to rest on and detain said bale during the cradle tilting to unload the bale, the arm moving away from the bale once the latter is laid on firm ground.

FIG.2

## A MACHINE FOR ENVELOPING FODDER BALES OR THE LIKE

This invention relates to an agricultural machine for handling cylindrical fodder bales or the like, and is more particularly concerned with a machine for enveloping said bales in a protective web or film to preserve the material.

A machine is known for the above function, which comprises: a truck structure adapted to be towed by a tractor; a bale holding cradle mounted on said truck, and rotating about a vertical center axis; the cradle is provided with two parallel rollers turning in opposite directions from each other, and is tiltable from a horizontal working position on the truck to a vertical, rearward-unloading position; and a web dispenser for the web or film to be wrapped around the bale while it is being rotated by the cradle (about the vertical axis) and by the horizontal rollers (about its own axis).

The machine, as described so far, has, however, some disadvantages.

In fact, the bale cannot be held as it is unloaded by tilting the cradle, thereby the bale will frequently fall off the machine, when the cradle is tilted, and drop onto the ground and roll away. This is objectionable because the protective web or film wrapped around a dropped bale may easily become punctured to the detriment of the material preservability.

In addition, the machine can only be towed by, not carried on, the agricultural tractor, which restricts the manoeuvring range of the latter.

The aim of the present invention is to obviate such disadvantages by providing a machine for enveloping a cylindrical bale in a protective web or film, which is adapted, during the unloading of the bale, to detain the bale on the cradle until it is laid onto the ground. The above aim, and other objects which will become apparent hereinafter are achieved by a machine for enveloping fodder bales or the like in a protective web or film, comprising: on a truck-like load-bearing structure adapted to be connected to an agricultural tractor, a bale holding cradle, adapted to rotate about a vertical center axis and having two parallel rollers turning in opposite directions from each other, said cradle being tiltable from a horizontal working position to a vertical, rearward-unloading position and a dispenser of the protective web or film to be wrapped around the bale, while the latter is being rotated by said cradle and said rollers: the cradle being attached to the load-bearing structure through a support beam shiftable from a horizontal position of rest onto the load-bearing structure to an upright position, characterized in that it comprises an upright mounted on said support beam and carrying, at the top, a rocker arm controlled to stay off a bale on the cradle during application of the protective web or film, and to rest on and detain said bale as the cradle is tilted to unload the bale, the arm being moved away from the bale once the latter is on firm ground.

The bale, once enveloped in the protective web or film, can thus be laid gently onto the ground with no danger of its protection becoming ruptured or punctured. Furthermore, and advantageously, the arm assisting the cradle in unloading the finished bale may be also used to pick up a bale from the ground and load it onto the cradle, without the need of further means as employed heretofore the machines of prior art.

Further characteristics and advantages of the invention will become apparent from a detailed description of a particular embodiment, illustrated by way of non-limitative example in the accompanying drawings wherein:

Fig. 1 is a general perspective view of the machine, shown with the cradle in the horizontal position;

Fig.2 is an opposite prospective view, with respect to Fig. 1, of the machine, wherein a web or film is being applied to a bale; and

Figs. 3 and 4 are side schematic views of the machine, respectively showing it at intermediate and final stages of a finished bale unloading operation.

With reference to the drawings, the machine comprises a load-bearing structure, such as a two-wheeled truck 10 which is equipped frontally with a means 11 for connecting it to the three-point power take-off of an agricultural tractor. A cradle 12, adapted to hold a cylindrical bale 13 to be protectively enveloped, and a dispenser 14 for applying a protective web or film 15 to the bale 13, are mounted on the truck structure 10.

The cradle 12 is mounted on the truck structure 10 through a longitudinal support beam 16, said beam being pivoted to the rear end of said structure 10 and linked to an actuating cylinder 17 for a tilting motion from a horizontal position of rest onto the load-bearing structure 10 to a near-vertical position.

In further detail, the cradle 12 comprises a frame 12a mounted on said beam 16 so as to be rotatable about a vertical center axis, and a pair of parallel horizontal rollers 12b mounted to said frame 12a and turning in opposite directions from each other. The frame 12a can rotate about the vertical axis and the rollers 12b can rotate about their own axes, by means of adapted drives, not shown. Accordingly, the cradle 12 as a whole can be tilted, together with the support beam 16, from a horizontal working position to a vertical, rearward unloading/loading position where it will arrange approximately orthogonally to the ground surface.

An upright 18 is attached to the support beam 16, at a location adjacent to the connecting means 11. The upright 18 has a rocker arm 19 attached to the top. This arm 19 is pivoted at 19a to the upright 18, and has an arcuate portion 19b adapted to partially embrace the periphery of the bale 13. The arm 19 is driven by an actuating cylinder 20 linked to its trailing end 19c to shift it angularly toward and away from the bale.

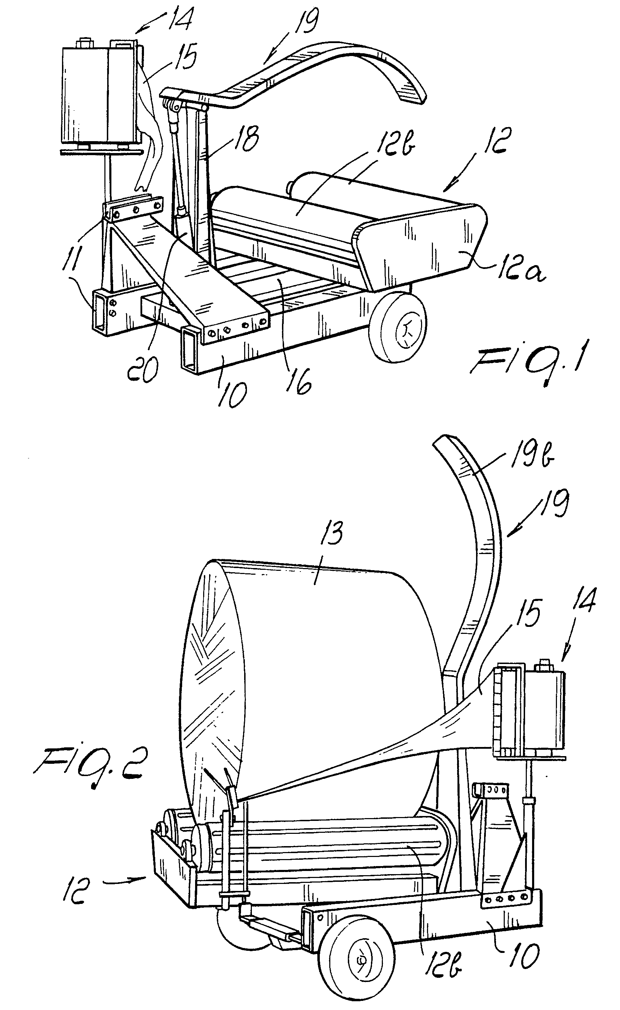

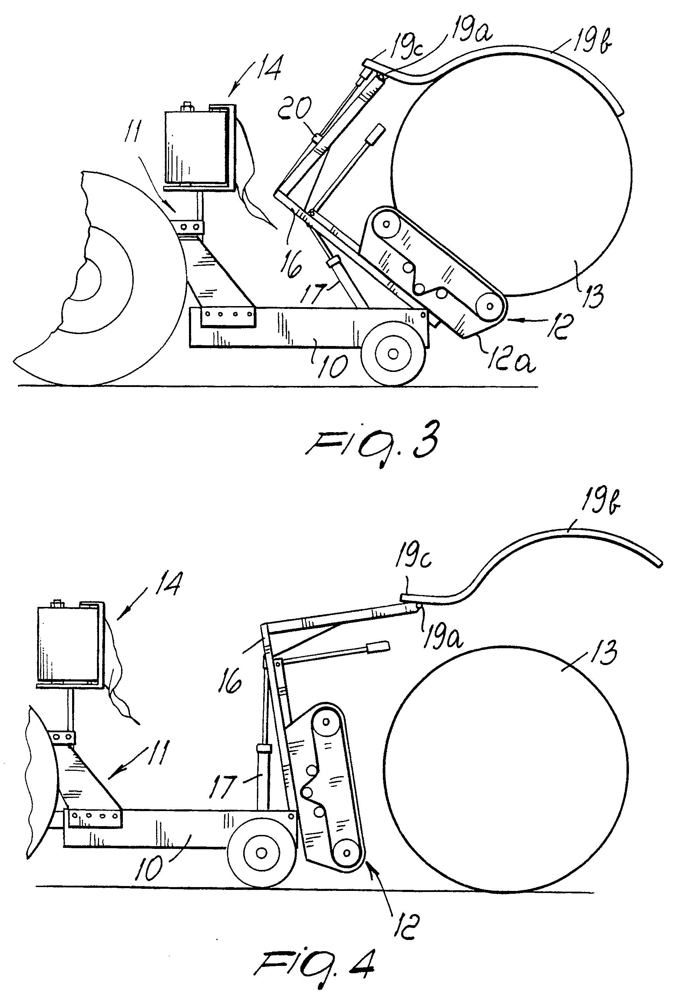

During the normal operation of the machine for applying a web or film 15 to the bale 13, the arm 19 would be held off the bale as shown in Fig. 2, not to interfere with the bale turning.

Conversely, the rocker arm 19 would be lowered onto the bale 13, during the unloading step, by rearwardly tilting the cradle 12 once the protection has been applied. Thus, the arm 19 will detain the bale 13 onto the cradle 12 and allow it to be laid gently onto the ground, as shown in Fig. 3, of the drawings. It is only then, that the arm will be turned away from the bale to leave it on the ground as shown in Fig. 4.

It stands to reason that by reversing the sequence of controls and movements, for both the arm and the cradle, a bale could be picked up from the ground, if desired, and released to the cradle with the latter in the horizontal position, i.e. in a condition appropriate to apply the protective web or film to the bale.

The machine, according to the invention is susceptible to numerous modifications and variations, all of which are within the scope of the same inventive concept.

The materials, as well as the dimensions, may also be the most appropriate according to the specific requirements.

Where technical features mentioned in any claim are followed by reference signs, those reference signs have been included for the sole purpose of increasing the intelligibility, of the claims and accordingly, such reference signs do not have any limiting effect on the scope of each element identified by way of example by such reference signs.

## Claims

1. A machine for enveloping fodder bales or the like in a protective web or film, comprising: on a truck-like load-bearing structure (10) adapted to be connected to an agricultural tractor, a bale holding cradle (12), adapted to rotate about a vertical center axis and having two paralled rollers (12b) turning in opposite directions from each other, said cradle being tiltable from a horizontal working position to a vertical, rearward-unloading position and a dispenser (14) of the protective web or film (13) to be wrapped around the bale, while the latter is being rotated by said cradle and said rollers: the cradle being attached to the load-bearing structure (10) through a support beam (16) shiftable from a horizontal position of rest onto the load-bearing structure to an upright position, characterized in that it comprises an upright mounted on said support beam (16) and carrying, at the top, a rocker arm (19) controlled to stay off a bale on the cradle during application of the protective web or film, and to rest on and detain said bale as the cradle is tilted to unload the bale, the arm being moved away from the bale once the latter is on firm ground.

2. A machine according to claim 1, wherein said arm (19) is pivoted on the upright (18) to extend toward the rear of the cradle (12) and has an arcuate portion (19b) adapted to partly embrace a bale on said cradle, and is driven through an actuating cylinder (20) to perform its rocking movements toward and away from said bale.

3. A machine according to claim 1, wherein said arm (19) is also controllable and usable for picking up a bale from the ground in co-operation with said tilting cradle.

4. A machine according to one or more of the preceding claims, wherein the truck-line load-bearing structure (10) is equipped on the front with a means (11) for connecting it to the three-point powers take-off of an agricultural tractor.

Fig.1

Fig.2

4

Fig. 3

Fig. 4

European
Patent Office

**EUROPEAN SEARCH
REPORT**

Application Number

**EP 90 12 0234**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | GB-A-2 191 984 (FITZELL)<br>* page 1, line 107 - page 2, line 78; figures 1-2 *<br>— — — | 1,4 | A 01<br>F 15/08 |
| Y,A | US-A-4 411 573 (TOWNSEND)<br>* column 2, line 39 - column 4, line 39; figures 1-3 *<br>— — — | 1,2,3 | |
| A | GB-A-2 159 489 (EIGHT MILIEU NOMINEES)<br>* the whole document *<br>— — — | 1-4 | |
| E | EP-A-0 405 727 (KVERNELAND UNDERHAUG)<br>* column 6, line 50 - column 8, line 52; figures 1-6 *<br>— — — | 1-4 | |
| E | EP-A-0 394 011 (KVERNELAND UNDERHAUG)<br>* column 4, line 55 - column 7, line 9; figures 1-10 *<br>— — — — — | 1-4 | |

TECHNICAL FIELDS
SEARCHED (Int. Cl.5)

A 01 F
A 01 D

The present search report has been drawn up for all claims

| Place of search | Date of completion of search | Examiner |
|---|---|---|
| The Hague | 20 February 91 | HERYGERS J.J. |